# EUROPÄISCHE PATENTANMELDUNG

(11) **EP 4 736 716 A2**
(43) Veröffentlichungstag der Anmeldung: **06.05.2026**
(21) Anmeldenummer: 25224849.7
(22) Anmeldetag: 13.09.2023
(51) Int. Cl.: A47J 43/07

(54) **GEFÄSSANORDNUNG FÜR EIN KÜCHENGERÄT, VERFAHREN ZUM BETREIBEN EINER GEFÄSSANORDNUNG FÜR EIN KÜCHENGERÄT UND MASCHINENLESBARES SPEICHERMEDIUM**

(62) Teilanmeldung aus: 23197164.9
(71) Anmelder: Vorwerk & Co. Interholding GmbH, 42275 Wuppertal (DE)
(72) Erfinder: Wahle, Volker, 46499 Hamminkeln (DE)
(74) Vertreter: Cohausz & Florack

(57) **Zusammenfassung**

Gefäßanordnung (100, 200, 306, 406) für ein Küchengerät (300, 400) mit mindestens einem ein magnetfeldbasiertes Sensorelement (106, 108, 208, 314, 412, 414, 416, 418, 500, 502, 600) aufweisenden ersten Bauteil (102, 202, 308, 408), mit mindestens einem ein magnetfeldbasiertes Gegenelement (114, 116, 214, 316, 420, 422, 700, 702) mit einem Magnetfeld aufweisenden zweiten Bauteil (112, 212, 310, 410), und mit einer Auswertungseinrichtung (110, 210, 304, 411), die dadurch gekennzeichnet ist, dass das mindestens eine magnetfeldbasierte Sensorelement (106, 108, 208, 314, 412, 414, 416, 418, 500, 502, 600) dazu eingerichtet ist, das Magnetfeld des mindestens einen magnetfeldbasierten Gegenelements (114, 116, 214, 316, 420, 422, 700, 702) zu erfassen und mindestens eine Angabe für das erfasste Magnetfeld auszugeben, wobei die mindestens eine Angabe Koordinaten für mindestens zwei Dimensionen eines Koordinatensystems aufweist, und dass die Auswertungseinrichtung (110, 210, 304, 411) dazu eingerichtet ist, auf der Grundlage der mindestens einen ausgegebenen Angabe eine Information über einen Bauteiltyp des zweiten Bauteils (112, 212, 310, 410) und eine Information über eine Position des zweiten Bauteils (112, 212, 310, 410) zu bestimmen.

## Beschreibung

Die vorliegende Erfindung betrifft eine Gefäßanordnung für ein Küchengerät mit mindestens einem ein magnetfeldbasiertes Sensorelement aufweisenden ersten Bauteil, mit mindestens einem ein magnetfeldbasiertes Gegenelement mit einem Magnetfeld aufweisenden zweiten Bauteil, und mit einer Auswertungseinrichtung. Die vorliegende Erfindung betrifft weiter ein Verfahren und ein maschinenlesbares Speichermedium.

Aus dem Stand der Technik sind Küchengeräte bekannt, die zum zumindest teilautomatischen Zubereiten von Speisen eingerichtet sind. Derartige Küchengeräte können mindestens eine Gefäßanordnung und ein Grundgerät aufweisen. Optional können auch separate Bauteile oder Zubehörteile vorgesehen sein, die mit der Gefäßanordnung und / oder mit dem Grundgerät zusammenwirken, um je nach erzieltem Gericht, Getränk oder Ähnliches ein Lebensmittel zu verarbeiten. Bauteile der Gefäßanordnung oder separate Zubehörteile werden in der Regel durch Küchengeräteanbieter beispielsweise als Kochgefäß, Gargefäß, Deckel, Schneide- oder Rührelement oder Ähnliches angeboten. Im Allgemeinen können das Grundgerät oder Bauteile der Gefäßanordnung jeweils miteinander kompatible Schnittstellen aufweisen, die ein Zusammenwirken ermöglichen. Insbesondere kann durch miteinander in Zusammenwirkung gebrachte Schnittstellen ein Antrieb eines beweglichen Elements der Gefäßanordnung oder eines Zubehörteils durch einen in dem Grundgerät angeordneten Elektromotor erfolgen.

Eine Gefäßanordnung kann ein Speiseaufnahmeelement, beispielsweise in Form eines Topfs, und mindestens ein Deckelelement umfassen. Das Deckelelement ist vorzugsweise dazu eingerichtet, das Speiseaufnahmeelement zumindest teilweise zu verschließen bzw. abzudecken.

Aus dem Stand der Technik ist es bekannt, durch mechanische Mittel oder durch Erfassen einer entsprechenden Nutzereingabe festzustellen, ob ein Bauteil einer Gefäßanordnung an einem weiteren Bauteil der Gefäßanordnung montiert bzw. befestigt ist. So kann zum Beispiel durch Einrastmechanismus festgestellt werden, dass ein Abdeckungselement an einem Speiseaufnahmeelement befestigt bzw. verriegelt ist. Solche bekannten Systeme erfordern in der Regel eine Nutzereingabe oder spezifische Mechanismen, die gegebenenfalls eine platzsparende Formgestaltung erschweren.

Vor diesem Hintergrund liegt der vorliegenden Erfindung die Aufgabe zu Grunde, Gefäßanordnungen für Küchengeräte zu verbessern, insbesondere die Nutzerfreundlichkeit von Gefäßanordnungen für Küchengeräte zu erhöhen.

Die zuvor genannte Aufgabe wird gemäß einer ersten Lehre der vorliegenden Offenbarung durch eine Gefäßanordnung für ein Küchengerät mit mindestens einem ein magnetfeldbasiertes Sensorelement aufweisenden ersten Bauteil, mit mindestens einem ein magnetfeldbasiertes Gegenelement mit einem Magnetfeld aufweisenden zweiten Bauteil und mit einer Auswertungseinrichtung dadurch gelöst, dass das mindestens eine magnetfeldbasierte Sensorelement dazu eingerichtet ist, das Magnetfeld des mindestens einen magnetfeldbasierten Gegenelements zu erfassen und mindestens eine Angabe für das erfasste Magnetfeld auszugeben, wobei die mindestens eine Angabe Koordinaten für mindestens zwei Dimensionen eines Koordinatensystems aufweist, und dass die Auswertungseinrichtung dazu eingerichtet ist, auf der Grundlage der mindestens einen ausgegebenen Angabe eine Information über einen Bauteiltyp des zweiten Bauteils und eine Information über eine Position des zweiten Bauteils zu bestimmen.

Die zuvor genannte Aufgabe wird gemäß der ersten Lehre der vorliegenden Offenbarung weiterhin gelöst durch ein Verfahren zum Betreiben einer Gefäßanordnung für ein Küchengerät, insbesondere zum Betreiben einer Gefäßanordnung nach einem der voranstehenden Ansprüche, bei dem ein Magnetfeld mindestens eines an einem zweiten Bauteil der Gefäßanordnung vorgesehenen magnetfeldbasierten Gegenelements durch mindestens ein an einem ersten Bauteil der Gefäßanordnung vorgesehenes magnetfeldbasiertes Sensorelement erfasst wird, bei dem für das erfasste Magnetfeld mindestens eine Angabe mit Koordinaten für mindestens zwei Dimensionen eines Koordinatensystems ausgegeben wird, und bei dem auf der Grundlage der mindestens einen ausgegebenen Angabe eine Information über einen Bauteiltyp des zweiten Bauteils und mindestens eine Information über eine Position des zweiten Bauteils bestimmt werden.

Mit der Lösung gemäß der ersten Lehre der vorliegenden Offenbarung können durch Vorsehen eines Sensorelements und eines Gegenelements sowohl eine Position eines Bauteils der Gefäßanordnung als auch sein Bauteiltyp automatisch bestimmt werden. Somit kann beispielsweise erkannt werden, dass ein Bauteil ein Deckelelement ist und dass das erkannte Deckelelement an einem Speiseaufnahmegefäß bestimmungsgemäß positioniert ist.

Die zuvor genannte Aufgabe wird gemäß einer zweiten Lehre der vorliegenden Offenbarung durch eine Gefäßanordnung für ein Küchengerät mit mindestens einem ein magnetfeldbasiertes Sensorelement aufweisenden ersten Bauteil, mit mindestens einem ein magnetfeldbasiertes Gegenelement mit einem Magnetfeld aufweisenden zweiten Bauteil und mit einer Auswertungseinrichtung dadurch gelöst, dass das mindestens eine magnetfeldbasierte Sensorelement dazu eingerichtet ist, das Magnetfeld des mindestens einen magnetfeldbasierten Gegenelements zu erfassen und mindestens eine Angabe für das erfasste Magnetfeld auszugeben, wobei die mindestens eine Angabe Koordinaten für mindestens zwei Dimensionen eines Koordinatensystems aufweist, und dass die Auswertungseinrichtung dazu eingerichtet ist, auf der Grundlage der mindestens einen ausgegebenen Angabe eine Information über einen Bauteiltyp des zweiten Bauteils zu bestimmen.

Die zuvor genannte Aufgabe wird gemäß der zweiten Lehre der vorliegenden Offenbarung weiterhin gelöst durch ein Verfahren zum Betreiben einer Gefäßanordnung für ein Küchengerät, insbesondere zum Betreiben einer Gefäßanordnung nach einem der voranstehenden Ansprüche, bei dem ein Magnetfeld mindestens eines an einem zweiten Bauteil der Gefäßanordnung vorgesehenen magnetfeldbasierten Gegenelements durch mindestens ein an einem ersten Bauteil der Gefäßanordnung vorgesehenes magnetfeldbasierten Sensorelement erfasst wird, bei dem für das erfasste Magnetfeld mindestens eine Angabe mit Koordinaten für mindestens zwei Dimensionen eines Koordinatensystems ausgegeben wird, und bei dem auf der Grundlage der mindestens einen ausgegebenen Angabe eine Information über einen Bauteiltyp des zweiten Bauteils bestimmt wird.

Mit der Lösung gemäß der zweiten Lehre der vorliegenden Offenbarung können ein Bauteiltyp automatisch erkannt werden und zugleich die Auswertung der Sensordaten vergleichsweise einfach gehalten werden, so dass eine kostengünstige Ausbildung der Gefäßanordnung erreicht werden kann.

Die zuvor genannte Aufgabe wird gemäß einer dritten Lehre der vorliegenden Offenbarung durch eine Gefäßanordnung für ein Küchengerät mit mindestens einem ein magnetfeldbasiertes Sensorelement aufweisenden ersten Bauteil, mit mindestens einem ein magnetfeldbasiertes Gegenelement mit einem Magnetfeld aufweisenden zweiten Bauteil und mit einer Auswertungseinrichtung dadurch gelöst, dass das mindestens eine magnetfeldbasierte Sensorelement dazu eingerichtet ist, das Magnetfeld des mindestens einen magnetfeldbasierten Gegenelements zu erfassen und mindestens eine Angabe für das erfasste Magnetfeld auszugeben, wobei die mindestens eine Angabe Koordinaten für mindestens zwei Dimensionen eines Koordinatensystems aufweist, und dass die Auswertungseinrichtung dazu eingerichtet ist, auf der Grundlage der mindestens einen ausgegebenen Angabe eine Information über eine Position des zweiten Bauteils zu bestimmen.

Die zuvor genannte Aufgabe wird gemäß der dritten Lehre der vorliegenden Offenbarung weiterhin gelöst durch ein Verfahren zum Betreiben einer Gefäßanordnung für ein Küchengerät, insbesondere zum Betreiben einer Gefäßanordnung nach einem der voranstehenden Ansprüche, bei dem ein Magnetfeld mindestens eines an einem zweiten Bauteil der Gefäßanordnung vorgesehenen magnetfeldbasierten Gegenelements durch mindestens ein an einem ersten Bauteil der Gefäßanordnung vorgesehenes magnetfeldbasierten Sensorelement erfasst wird, bei dem für das erfasste Magnetfeld mindestens eine Angabe mit Koordinaten für mindestens zwei Dimensionen eines Koordinatensystems ausgegeben wird, und bei dem auf der Grundlage der mindestens einen ausgegebenen Angabe eine Information über eine Position des zweiten Bauteils bestimmt wird.

Mit der Lösung gemäß der dritten Lehre der vorliegenden Offenbarung kann eine Position oder eine Positionsänderung eines Bauteils automatisch erkannt werden und auch hier die Auswertung der Sensordaten vergleichsweise einfach gehalten werden, so dass eine kostengünstige Ausbildung der Gefäßanordnung erreicht werden kann.

Mit den jeweiligen Lösungen der ersten, der zweiten und der dritten Lehre der vorliegenden Offenbarung kann für eine Bauteiltyperkennung und / oder für eine Bestimmung der Position des zweiten Bauteils auf eine Nutzereingabe verzichtet werden, so dass die offenbarten Gefäßanordnungen und Verfahren insgesamt eine gesteigerte Nutzerfreundlichkeit bieten.

Die zuvor genannte Aufgabe wird gemäß einer vierten Lehre der vorliegenden Offenbarung gelöst durch ein maschinenlesbares Speichermedium mit Programmanweisungen, die, wenn sie durch einen Prozessor einer Gefäßanordnung für ein Küchengerät oder eines Küchengeräts, insbesondere einer Gefäßanordnung gemäß der ersten, der zweiten oder der dritten Lehre der vorliegenden Offenbarung, ausgeführt werden, die Gefäßanordnung oder das Küchengerät dazu veranlassen, ein Verfahren gemäß der ersten, der zweiten oder der dritten Lehre vorliegenden Offenbarung durchzuführen.

Mit der Lösung gemäß der vierten Lehre der vorliegenden Offenbarung kann eine Gefäßanordnung, die bereits über ein magnetfeldbasiertes Sensorelement und ein magnetfeldbasiertes Gegenelement verfügt, nachgerüstet werden, um die vorteilhaften Effekte der ersten, der zweiten und / oder der dritten Lehre der vorliegenden Offenbarung zu erreichen.

Das erste Bauteil kann ein Speiseaufnahmeelement sein, beispielsweise mit einer Öffnung zur Aufnahme von Lebensmitteln, mit einer Öffnung zur Aufnahme eines Schneideelements und mit einem Griff. Das zweite Bauteil kann ein Abdeckungselement sein, das zur Abdeckung der Öffnung zur Aufnahme von Lebensmitteln des Speiseaufnahmeelements ausgebildet ist. Dabei kann das zweite Bauteil eine oder mehrere Luftdurchlassöffnungen aufweisen.

Das erste Bauteil und das zweite Bauteil bilden zusammen einen Aufnahmeraum mit einem Aufnahmevolumen. Der Aufnahmeraum kann sich zur luftdurchlässigen Aufnahme von Lebensmitteln eignen. Dabei kann die Luftdurchlässigkeit des Aufnahmeraumes insbesondere auf eine oder mehrere Lüftungsöffnungen des zweiten Bauteils zurückzuführen sein.

Das erste Bauteil und das zweite Bauteil sind vorzugsweise derart ausgebildet, dass diese in mindestens einer Aufbauposition miteinander montiert werden können, beispielsweise indem das zweite Bauteil eine Öffnung des ersten Bauteils abdeckt und somit den Aufnahmeraum mit dem Aufnahmevolumen im Sinne der vorliegenden Offenbarung bildet. Das erste Bauteil und das zweite Bauteil können ferner derart ausgebildet sein, dass diese eine geöffnete Position annehmen können, wobei in der geöffneten Position das erste Bauteil und das zweite Bauteil einen Aufnahmeraum mit einem nahezu unendlichen Aufnahmevolumen bilden.

Das mindestens eine magnetfeldbasierte Gegenelement ist vorzugsweise zum Erzeugen eines Magnetfeldes ausgebildet, beispielsweise aufgrund von innewohnenden Materialeigenschaften oder durch Anwendung eines elektrischen Stroms. Beispiele für das mindestens eine magnetfeldbasierte Gegenelement sind: Magnet, Dauermagnet, Elektromagnet, Spule, wobei diese Liste nicht abschließend ist.

Das mindestens eine magnetfeldbasierte Gegenelement ist vorzugsweise derartig ausgewählt, dass folgende Anforderungen erfüllt sind: hohe Remanenz, geringer Temperaturdrift, hoher Temperatureinsatzbereich, geringe Alterung und / oder geringe Schockempfindlichkeit. Hierzu kann das magnetfeldbasierte Gegenelement nach Materialzusammensetzung ausgewählt worden sein.

Das mindestens eine magnetfeldbasierte Sensorelement ist vorzugsweise für das Magnetfeld empfindlich. Ein Beispiel für das mindestens eine magnetfeldbasierte Sensorelement ist ein Hall-Sensor, mit dem der Einfluss einer Lorenzkraft von einem Magnetfeld auf ein in dem Sensor fließender Strom bzw. eine Hall-Spannung erfasst und auf der Grundlage deren eine magnetische Flussdichte ausgegeben werden kann. Ein besonderes Beispiel für das mindestens eine magnetfeldbasierte Sensorelement ist ein 3D-Hall-Sensor, der dazu eingerichtet ist, Komponente der magnetischen Flussdichte eines Magnetfelds in drei Raumrichtungen auszugeben. Vorzugsweise weist das mindestens eine magnetfeldbasierte Sensorelement Mittel zur Übertragung von Daten auf die Auswertungseinrichtung, insbesondere zur Ausgabe der Angabe für das erfasste Magnetfeld an die Auswertungseinrichtung auf.

Am ersten Bauteil kann ein einzelnes magnetfeldbasiertes Sensorelement oder eine Mehrzahl von magnetfeldbasierten Sensorelementen vorgesehen sein. Durch Vorsehen eines einzelnen magnetfeldbasierten Sensorelements kann die Gefäßanordnung, insbesondere das erste Bauteil, kostengünstig ausgebildet sein und die Auswertung der Sensordaten dann einfach gehalten werden. Das Vorsehen einer Mehrzahl von magnetfeldbasierten Sensorelementen, beispielsweise von zwei magnetfeldbasierten Sensorelementen, ermöglicht eine erhöhte Messgenauigkeit und gegebenenfalls durch Redundanz ein gegenseitiges Ausschließen von Erfassungsfehlern.

Am zweiten Bauteil kann ein einzelnes magnetfeldbasiertes Gegenelement oder eine Mehrzahl von magnetfeldbasierten Gegenelementen vorgesehen sein. Durch Vorsehen eines einzelnen magnetfeldbasierten Gegenelements kann die Gefäßanordnung, insbesondere das zweite Bauteil, kostengünstig ausgebildet sein und die Erfassung bzw. Auswertung der entsprechenden Sensordaten dann einfach gehalten werden. Das Vorsehen einer Mehrzahl von magnetfeldbasierten Gegenelementen, beispielsweise von zwei magnetfeldbasierten Gegenelementen, ermöglicht eine erhöhte Genauigkeit bei der Bestimmung der Position des zweiten Bauteils.

Das mindestens eine magnetfeldbasierte Sensorelement kann dazu eingerichtet sein, überlappende Magnetfelder zu erfassen, wobei jedes Magnetfeld durch ein magnetfeldbasiertes Gegenelement erzeugt ist. Alternativ oder zusätzlich können Paare vorgesehen sein, wobei jedes Paar ein magnetfeldbasiertes Sensorelement und ein magnetfeldbasiertes Gegenelement aufweist, und wobei das magnetfeldbasierte Sensorelement eines Paares das Magnetfeld des magnetfeldbasierten Gegenelements erfasst.

Die Auswertungseinrichtung weist vorzugsweise einen Prozessor mit einem Speichermedium auf. Insbesondere kann ein Computerprogramm mit Befehlen auf dem Speichermedium gespeichert sein, deren Ausführung durch den Prozessor die Durchführung eines Betriebsverfahrens durch die Gefäßanordnung bewirkt. Die Auswertungseinrichtung kann am ersten Bauteil der Gefäßanordnung angeordnet sein. Wenn die Gefäßanordnung in Zusammenhang mit einem Grundgerät eines Küchengeräts eingesetzt ist, kann die Auswertungseinrichtung am Grundgerät des Küchengeräts angeordnet sein, wobei die Auswertungseinrichtung dann Teil einer Steuerungseinrichtung des Küchengeräts sein kann.

Die mindestens eine durch das mindestens eine magnetfeldbasierte Sensorelement ausgegebene Angabe für das erfasste Magnetfeld kann kartesische Koordinaten oder Kugelkoordinaten aufweisen. Vorzugsweise sind die Koordinaten der durch das mindestens eine magnetfeldbasierte Sensorelement ausgegebenen Angabe in einem Koordinatensystem ausgedrückt, dessen Ursprung eine Position des mindestens einen magnetfeldbasierten Sensorelements ist. Alternativ oder zusätzlich kann die Angabe einer vektoriellen Angabe *̅B̅*̅ mit einem Betrag |B| und einer Richtungsangabe entsprechen. Ein Beispiel für eine durch das mindestens eine magnetfeldbasierte Sensorelement ausgegebene Angabe ist eine magnetische Flussdichte mit Koordinaten in den x, y und z Richtungen eines Koordinatensystems, dessen Ursprung eine Position des mindestens einen magnetfeldbasierten Sensorelements ist.

Die mindestens eine durch das mindestens eine magnetfeldbasierte Sensorelement ausgegebene Angabe für das erfasste Magnetfeld kann Koordinaten für drei Dimensionen eines Koordinatensystems aufweisen, beispielsweise x, y, z in einem kartesischen Koordinatensystem, dessen Ursprung die Position des mindestens einen magnetfeldbasierten Sensorelements ist, oder beispielsweise r, Theta, Phi in einem sphärischen Koordinatensystem, dessen Ursprung die Position des mindestens einen magnetfeldbasierten Sensorelements ist. Mit der dritten Dimension, beispielsweise einem Raumwinkel in der Horizontalen, Phi in sphärischen Koordinaten, kann bestimmt werden, ob das zweite Bauteil ein mögliches Verdrehen erfährt, oder ob das zweite Bauteil entgegen einer bestimmungsgemäßen Nutzungsvorgabe manipuliert ist.

Die Information über einen Bauteiltyp kann ausreichen, um ein Bauteil zu identifizieren bzw. im Kontext einer Datenbank zuordnen zu können. Beispiele für Informationen über einen Bauteiltyp sind: Schneide-, Rühr-, Koch-, Wiege-, Gar-, Dampf- oder Abdeckungselement. Zusätzlich kann die Information über einen Bauteiltyp auch eine Herkunftsinformation wie Herstelleridentität, Herstellungszeitpunkt, Herstellungsort, Authentifizierungsinformation, Identifikationsnummer, wie zum Beispiel eine Seriennummer oder einen Universally Unique Identifier (UUID) aufweisen. Vorzugsweise ist der Bauteiltyp durch den Zubehörteilhersteller vor dem Vertrieb bzw. im Rahmen der Produktion vergeben worden. Die Bauteiltypen können sich durch ihre Funktion oder Anwendungsmöglichkeiten unterscheiden und ermöglichen somit eine andere Verwendung der Gefäßanordnung.

Die Information über eine Position des zweiten Bauteils kann einer Position des mindestens einen magnetfeldbasierten Gegenelements relativ zum magnetfeldbasierten Sensorelement entsprechen. Beispiele für die Position des zweiten Bauteils bzw. für eine Position des mindestens einen magnetfeldbasierten Gegenelements relativ zum mindestens einen magnetfeldbasierten Sensorelement sind: eine Winkelangabe, ein Abstand, ein absoluter Betrag für einen Vektor, eine Richtungsangabe, ein Vektor.

Im Folgenden werden verschiedene Ausführungsformen der Gefäßanordnungen und der Verfahren gemäß der ersten bis dritten Lehre sowie des maschinenlesbaren Speichermediums gemäß der vierten Lehre beschrieben, wobei die einzelnen Ausführungsformen jeweils unabhängig voneinander für die Gefäßanordnungen, die Verfahren und das maschinenlesbare Speichermedium der ersten bis vierten Lehre gelten. Darüber hinaus können die einzelnen Ausführungsformen beliebig miteinander kombiniert werden.

Bei einer Ausführungsform der Gefäßanordnung ist vorgesehen, dass die Auswertungseinrichtung dazu eingerichtet ist, eine Ausrichtung des mindestens einen magnetfeldbasierten Gegenelements in Abhängigkeit von der mindestens einen Angabe zu bestimmen, dass die Auswertungseinrichtung dazu eingerichtet ist, die bestimmte Ausrichtung des mindestens einen magnetfeldbasierten Gegenelements mit mindestens einem Referenzwert für eine Ausrichtung zu vergleichen, wobei der mindestens eine Referenzwert für eine Ausrichtung mindestens einem Bauteiltyp zugeordnet ist, und dass die Auswertungseinrichtung dazu eingerichtet ist, einen Bauteiltyp für das das mindestens eine magnetfeldbasierte Gegenelement aufweisende zweite Bauteil in Abhängigkeit von dem Vergleichsergebnis zu bestimmen.

Somit lässt sich anhand einer Ausrichtung des mindestens einen magnetfeldbasierten Gegenelements ein Bauteiltyp beispielsweise von der Herstellerseite einfach vorgeben und beim Einsatz der Gefäßanordnung dann einfach bestimmen.

Die Ausrichtung des mindestens einen magnetfeldbasierten Gegenelements kann eine Orientierung eines magnetischen Südpols und eines magnetischen Nordpols des magnetfeldbasierten Gegenelements relativ zum mindestens einen magnetfeldbasierten Sensorelement sein. Sind zwei oder mehr magnetfeldbasierte Gegenelemente vorgesehen, kann die Orientierung der respektiven magnetischen Nord- und Südpole relativ zueinander für eine Kodierung verwendet werden. Dadurch kann eine erweiterte Anzahl an Orientierungskombinationen verwendet werden, wobei jede Ausrichtung oder Orientierungskombination einem Bauteiltyp zugeordnet sein kann. Dadurch lässt sich ein erweitertes Repertoire an Bauteiltypen definieren und entsprechend erkennen.

Der Referenzwert für eine Ausrichtung ist vorzugsweise auf einem Datenträger beispielsweise der Auswertungseinrichtung gespeichert, der in einem Grundkörper des ersten Bauteils integriert oder am Grundkörper des ersten Bauteils dauerhaft angebracht ist. Alternativ kann der Referenzwert für eine Ausrichtung aus einem externen Server abgerufen werden.

Insbesondere kann ein Bauteiltyp durch Erkennen unterschiedlicher Ausrichtung des mindestens einen magnetfeldbasierten Gegenelements erfolgen. Es können beispielsweise durch Verwendung von zwei magnetfeldbasierten Gegenelementen vier verschiedene Deckeltypen erkannt werden, indem die Polarität der magnetfeldbasierten Gegenelemente gezielt angeordnet wird, also bei Dauermagneten zum Beispiel jeweils Nord-Süd oder Süd-Nord ausgerichtet werden. Alternativ könnte neben der Nord-Süd oder Süd-Nord Ausrichtung auch andere vordefinierte Ausrichtungen zugelassen sein, wodurch die Anzahl an möglichen erkennbaren Deckeltypen gesteigert wird. Es könnten axial polarisierte Magnete, alternativ oder zusätzlich diametral polarisierte Magnete eingesetzt werden, womit die Anzahl an möglichen erkennbaren Deckeltypen noch weiter gesteigert wird.

Bei einer Ausführungsform der Gefäßanordnung ist vorgesehen, dass die Auswertungseinrichtung dazu eingerichtet ist, eine Position des mindestens einen magnetfeldbasierten Gegenelements relativ zum mindestens einen magnetfeldbasierten Sensorelement in Abhängigkeit von der mindestens einen Angabe zu bestimmen, dass die Auswertungseinrichtung dazu eingerichtet ist, die bestimmte Position mit mindestens einer Referenzangabe für eine Position zu vergleichen, und dass die Auswertungseinrichtung dazu eingerichtet ist, eine Positionsänderung des zweiten Bauteils relativ zum ersten Bauteil in Abhängigkeit von dem Vergleichsergebnis zu bestimmen.

Bei einer Ausführungsform des Verfahrens ist vorgesehen, dass für einen ersten Anordnungszustand des zweiten Bauteils gegenüber dem ersten Bauteil eine erste Angabe ausgegeben wird, dass für einen zweiten Anordnungszustand des zweiten Bauteils gegenüber dem ersten Bauteil eine zweite Angabe ausgegeben wird, dass ein Unterschied zwischen der ersten Angabe und der zweiten Angabe bestimmt wird, und dass auf der Grundlage des bestimmten Unterschieds eine Information über eine Bewegung des zweiten Bauteils bestimmt wird.

Dadurch kann automatisch festgestellt werden, ob das zweite Bauteil montiert oder abmontiert wird. Beispielsweise kann dadurch bestimmt werden, ob ein Abdeckungselement auf einem Speiseaufnahmeelement aufgesetzt oder abgenommen wird. Darüber hinaus kann bestimmt werden, ob eine festgestellte Positionsänderung oder Bewegung erlaubt ist und dies automatisch bei der Steuerung der Gefäßanordnung oder eines Küchengeräts, der die Gefäßanordnung aufweist, berücksichtigen.

Die mindestens eine Referenzangabe für eine Position ist vorzugsweise auf einem Datenträger beispielsweise der Auswertungseinrichtung gespeichert, der in einem Grundkörper des ersten Bauteils integriert oder am Grundkörper des ersten Bauteils dauerhaft angebracht ist. Alternativ kann der Referenzwert für eine Ausrichtung aus einem externen Server abgerufen werden.

Die erste Angabe und die zweite Angabe können kartesische Koordinaten oder Kugelkoordinaten aufweisen. Vorzugsweise sind die Koordinaten in einem Koordinatensystem ausgedrückt, dessen Ursprung eine Position des mindestens einen magnetfeldbasierten Sensorelements ist. Alternativ oder zusätzlich kann die Angabe einer vektoriellen Angabe *̅B̅*̅ mit einem Betrag |B| und einer Richtungsangabe entsprechen. Beispielsweise können erste Angabe und die zweite Angabe jeweils eine magnetische Flussdichte mit Koordinaten in den x, y und z Richtungen eines Koordinatensystems aufweisen, dessen Ursprung eine Position des mindestens einen magnetfeldbasierten Sensorelements ist, oder mit Koordinaten r, Theta, Phi in einem sphärischen Koordinatensystem, dessen Ursprung die Position des mindestens einen magnetfeldbasierten Sensorelements ist. Mit der dritten Dimension, beispielsweise einem Raumwinkel in der Horizontalen, Phi in sphärischen Koordinaten, kann bestimmt werden, ob das zweite Bauteil ein mögliches Verdrehen erfährt, oder ob das zweite Bauteil entgegen einer bestimmungsgemäßen Nutzungsvorgabe manipuliert ist.

Die Auswertung kann durch die Auswertungseinrichtung am ersten Bauteil erfolgen, wobei die Auswertungseinrichtung dann ein Signal ausgibt, das die Information über die Position und / oder die Information über den Bauteiltyp in Form trägt.

Bei einer Ausführungsform der Gefäßanordnung ist vorgesehen, dass das zweite Bauteil ein erstes magnetfeldbasiertes Gegenelement mit einem ersten Magnetfeld und ein zweites magnetfeldbasiertes Gegenelement mit einem zweiten Magnetfeld aufweist, dass das mindestens eine magnetfeldbasierte Sensorelement dazu eingerichtet ist, das erste Magnetfeld und das zweite Magnetfeld und / oder eine Überlappung des ersten Magnetfeldes mit dem zweiten Magnetfeld zu erfassen, und dass die mindestens eine durch das mindestens eine magnetfeldbasierte Sensorelement ausgegebene Angabe der Erfassung des ersten Magnetfeldes und des zweiten Magnetfeldes und / oder einer Überlappung des ersten Magnetfeldes dem zweiten Magnetfeld entspricht.

Somit kann die Zuverlässigkeit der Bestimmung des Bauteiltyps und / oder der Position des zweiten Bauteils gesteigert werden.

Dabei können das erste magnetfeldbasierte Gegenelement und das zweite magnetfeldbasierte Gegenelement derart am zweiten Bauteil angeordnet sein, dass sich das erste Magnetfeld und das zweite Magnetfeld teilweise überlappen.

Die Anordnung der magnetfeldbasierten Gegenelemente relativ zueinander ist vorzugsweise derartig gewählt, dass es nur zu einer geringen Überlagerung der beiden Magnetfelder kommt. Ferner können die magnetfeldbasierten Gegenelemente horizontal im zweiten Bauteil angeordnet sein, so dass eine Positionsveränderung des zweiten Bauteils in der Höhe durch eine Winkelveränderung erkannt werden kann. Dadurch kann die Gefäßanordnung günstig fertiggestellt werden.

Bei einer Ausführungsform der Gefäßanordnung ist vorgesehen, dass das erste Bauteil mindestens zwei magnetfeldbasierte Sensorelemente aufweist.

Auch diese Ausführungsform ermöglicht eine gesteigerte Zuverlässigkeit der Bestimmung des Bauteiltyps und / oder der Position des zweiten Bauteils, insbesondere wenn eine durch ein erstes magnetfeldbasiertes Sensorelement ausgegebene Angabe zur Überprüfung einer durch ein zweites magnetfeldbasiertes Sensorelement ausgegebenen Angabe verwendet wird. Hierzu kann die Auswertungseinrichtung dazu eingerichtet sein, einen Redundanzvorgang durchzuführen, bei dem eine durch ein erstes magnetfeldbasiertes Sensorelement ausgegebene Angabe zur Überprüfung einer durch ein zweites magnetfeldbasiertes Sensorelement ausgegebenen Angabe verwendet wird.

Dadurch kann insbesondere eine Fehlfunktion der jeweiligen Sensorelemente durch ein weiteres Sensorelement (redundantes Sensorelement) detektiert werden. Dies erfolgt durch die Plausibilitätsprüfung der beiden redundanten Werte durch die Auswertungseinrichtung. Da die redundanten Sensorelemente unterschiedliche Positionen am ersten Bauteil aufweisen, liefern diese auch leicht unterschiedliche Messwerte, was zusätzlich zur Datenanalyse hinzugezogen werden kann und eine Manipulation des Systems erschwert.

Alternativ kann mindestens ein magnetfeldbasiertes Sensorelement mit einer Testfunktionalität bereitstellt werden, mit der eine Messkette überprüft werden kann.

Die mindestens zwei magnetfeldbasierte Sensorelemente können gleichartig sein, beispielsweise eine gleiche Materialzusammensetzung und / oder gleiche Dimensionen aufweisen. Darüber hinaus können die mindestens zwei magnetfeldbasierte Sensorelemente eine gleiche Ausrichtung zueinander aufweisen, beispielsweise parallel zueinander angeordnet sein und den Südpol in der gleichen Richtung orientiert sind, Alternativ können die die mindestens zwei magnetfeldbasierte Sensorelemente Ausrichtungen aufweisen, die voneinander abweichen. So können ein erstes magnetfeldbasiertes Sensorelemente mit einer vertikalen Ausrichtung und ein zweites magnetfeldbasiertes Sensorelemente mit einer horizontalen Ausrichtung vorgesehen sein.

Bei einer Ausführungsform der Gefäßanordnung ist vorgesehen, dass die Auswertungseinrichtung dazu eingerichtet ist, eine Zulässigkeitsangabe für das zweite Bauteil auf der Grundlage von mindestens einem Element aus der Liste zu bestimmen: die mindestens eine Angabe, das für das zweite Bauteil bestimmte Bauteiltyp, die für das zweite Bauteil bestimmte Position relativ zum ersten Bauteil.

Bei einer entsprechenden Ausführungsform des Verfahrens ist vorgesehen, dass auf der Grundlage eines für das zweite Bauteil bestimmten Bauteiltyps und / oder auf der Grundlage einer für das zweite Bauteil bestimmten Position relativ zum ersten Bauteil eine Zulässigkeitsangabe für das zweite Bauteil bestimmt wird.

Somit kann beispielsweise die Steuerung der Gefäßanordnung oder eines Küchengeräts, das die Gefäßanordnung aufweist, entsprechend der Zulässigkeitsangebe automatisch angepasst werden. Beispiele hierfür sind: eine Sperrung eines Verriegelungselements, eine Anpassung einer Motordrehzahl, eine Anpassung einer Heizleistung, eine Nutzeranzeige.

Beispiele für die Zulässigkeitsangabe sind: Heizen ohne Deckel erlaubt, Messerelement bis zu einer bestimmten Drehzahl ohne Deckel oder mit Deckel ohne Verriegelungselement erlaubt, Messerelement ab bestimmte Drehzahl nur mit Deckel und Verriegelungselement erlaubt, Messerelement bis zu einer bestimmten Drehzahl ohne Deckel oder mit Deckel und ohne Verriegelungselement erlaubt, Messerelement ab bestimmte Drehzahl nur mit Deckel und mit Verriegelungselement erlaubt.

Bei einer Ausführungsform der Gefäßanordnung ist vorgesehen, dass das erste Bauteil ein Aufnahmegefäß aufweist oder an einem Aufnahmegefäß montiert ist und / oder dass das zweite Bauteil ein Abdeckungselement aufweist oder an einem Abdeckungselement montierbar ist.

Dadurch kann die Nutzerfreundlichkeit der Gefäßanordnung für die meisten Anwendungsfälle der Gefäßanordnung gesteigert werden.

Bei einer Ausführungsform der Gefäßanordnung ist vorgesehen, dass in einer Betriebsposition das mindestens eine magnetfeldbasierte Gegenelement des zweiten Bauteils und das mindestens eine magnetfeldbasierte Sensorelement des ersten Bauteils im Wesentlichen gegenübereinander angeordnet sind.

Somit kann die Erfassung des Magnetfeldes durch das magnetfeldbasierte Sensorelement in dieser Betriebsposition zuverlässig gestaltet werden.

Vorzugsweise ist die Betriebsposition eine bestimmungsgemäß Position, bei der das erste Bauteil und das zweite Bauteil eine Zubereitung von Lebensmitteln ermöglichen. Ein Beispiel für die Betriebsposition ist eine geschlossene Position eines Abdeckungselements mit einem Speiseaufnahmeelement.

Bei einer Ausführungsform der Gefäßanordnung ist vorgesehen, dass das zweite Bauteil gegenüber dem ersten Bauteil um einen Drehpunkt von einer ersten Position in eine zweite Position schwenkbar ist, dass in der ersten Position das mindestens eine magnetfeldbasierte Gegenelement des zweiten Bauteils und das mindestens eine magnetfeldbasierte Sensorelement des ersten Bauteils im Wesentlichen gegenübereinander angeordnet sind und einen Zwischenraum bilden und dass der Drehpunkt außerhalb des Zwischenraums angeordnet ist.

Dadurch erfährt das mindestens eine magnetfeldbasierte Gegenelement im Falle einer Schwenkung des zweiten Bauteils gegenüber dem ersten Bauteil eine signifikante Bewegung bzw. Positionsänderung gegenüber dem mindestens einen magnetfeldbasierten Sensorelement.

Bei einer Ausführungsform der Gefäßanordnung ist vorgesehen, dass das mindestens eine magnetfeldbasierte Sensorelement ein 3D-Magnetfeldsensor, insbesondere ein 3D-Hall-Sensor ist.

Dadurch lässt sich eine Angabe mit Komponenten in drei Raumrichtungen ausgeben und somit auch eine Bestimmung der Position des zweiten Bauteils in einem dreidimensionalen Raum bestimmen.

Bei einer Ausführungsform des Verfahrens ist vorgesehen, dass kartesische Koordinaten der mindestens einen Angabe in sphärischen Koordinaten umgerechnet werden.

Somit lässt sich die Auswertung der durch das mindestens eine magnetfeldbasierte Sensorelement ausgegebene Angabe flexibler gestalten. Darüber hinaus lässt sich somit eine erweiterte Auswahl an magnetfeldbasierten Sensorelementen einsetzen.

Bei üblichen Hall-Sensoren wird beim Erfassen eines Magnetfeldes eine Angabe für eine Flussdichte in kartesischen Koordinaten ausgegeben, beispielsweise als X, Y Komponente für ein zweidimensionales Koordinatensystem oder als X,Y, Z Komponente für ein dreidimensionales Koordinatensystem. Diese können dann in ein sphärisches Koordinatensystem bzw. Kugelkoordinaten umgerechnet werden, beispielsweise in einen Winkel und einen Radius, oder in einen ersten Winkel, in einen zweiten Winkel und einen Radius.

Die Kugelkoordinaten bieten den Vorteil, dass eine Varianz der Remanenz (quasi die Veränderung der Stärke des Permanentmagneten) über Temperatur, Alterung, Fertigungstoleranzen etc. wenig Auswirkungen auf die Winkel zwischen dem mindestens einen magnetfeldbasierten Gegenelement und dem mindestens einen magnetfeldbasierten Sensorelement hat und sich dementsprechend auch die Auswertung der Feldlinienrichtung wenig bis nicht verändert.

Die folgenden nummerierten Absätze beschreiben Merkmale in Übereinstimmung mit Ausführungsformen der Offenbarung:
1. Gefäßanordnung für ein Küchengerät mit mindestens einem ein magnetfeldbasiertes Sensorelement aufweisenden ersten Bauteil, mit mindestens einem ein magnetfeldbasiertes Gegenelement mit einem Magnetfeld aufweisenden zweiten Bauteil, und mit einer Auswertungseinrichtung, wobei das mindestens eine magnetfeldbasierte Sensorelement dazu eingerichtet ist, das Magnetfeld des mindestens einen magnetfeldbasierten Gegenelements zu erfassen und mindestens eine Angabe für das erfasste Magnetfeld auszugeben, wobei die mindestens eine Angabe Koordinaten für mindestens zwei Dimensionen eines Koordinatensystems aufweist, und wobei die Auswertungseinrichtung dazu eingerichtet ist, auf der Grundlage der mindestens einen ausgegebenen Angabe eine Information über einen Bauteiltyp des zweiten Bauteils und eine Information über eine Position des zweiten Bauteils zu bestimmen.
2. Gefäßanordnung nach Absatz 1, wobei die Auswertungseinrichtung dazu eingerichtet ist, eine Ausrichtung des mindestens einen magnetfeldbasierten Gegenelements in Abhängigkeit von der mindestens einen Angabe zu bestimmen, wobei die Auswertungseinrichtung dazu eingerichtet ist, die bestimmte Ausrichtung des mindestens einen magnetfeldbasierten Gegenelements mit mindestens einem Referenzwert für eine Ausrichtung zu vergleichen, wobei der mindestens eine Referenzwert für eine Ausrichtung mindestens einem Bauteiltyp zugeordnet ist, und wobei die Auswertungseinrichtung dazu eingerichtet ist, einen Bauteiltyp für das das mindestens eine magnetfeldbasierte Gegenelement aufweisende zweite Bauteil in Abhängigkeit von dem Vergleichsergebnis zu bestimmen.
3. Gefäßanordnung nach Absatz 1 oder 2, wobei die Auswertungseinrichtung dazu eingerichtet ist, eine Position des mindestens einen magnetfeldbasierten Gegenelements relativ zum mindestens einen magnetfeldbasierten Sensorelement in Abhängigkeit von der mindestens einen Angabe zu bestimmen, wobei die Auswertungseinrichtung dazu eingerichtet ist, die bestimmte Position mit mindestens einer Referenzangabe für eine Position zu vergleichen, und wobei die Auswertungseinrichtung dazu eingerichtet ist, eine Positionsänderung des zweiten Bauteils relativ zum ersten Bauteil in Abhängigkeit von dem Vergleichsergebnis zu bestimmen.
4. Gefäßanordnung nach einem der voranstehenden Absätze 1 bis 3, wobei das zweite Bauteil ein erstes magnetfeldbasiertes Gegenelement mit einem ersten Magnetfeld und ein zweites magnetfeldbasiertes Gegenelement mit einem zweiten Magnetfeld aufweist, wobei das mindestens eine magnetfeldbasierte Sensorelement dazu eingerichtet ist, das erste Magnetfeld und das zweite Magnetfeld und / oder eine Überlappung des ersten Magnetfeldes mit dem zweiten Magnetfeld zu erfassen, und wobei die mindestens eine durch das mindestens eine magnetfeldbasierte Sensorelement ausgegebene Angabe der Erfassung des ersten Magnetfeldes und des zweiten Magnetfeldes und / oder einer Überlappung des ersten Magnetfeldes mit dem zweiten Magnetfeld entspricht.
5. Gefäßanordnung nach einem der voranstehenden Absätze 1 bis 4, wobei das erste Bauteil mindestens zwei magnetfeldbasierte Sensorelemente aufweist.
6. Gefäßanordnung nach einem der voranstehenden Absätze 1 bis 5, wobei die Auswertungseinrichtung dazu eingerichtet ist, eine Zulässigkeitsangabe für das zweite Bauteil auf der Grundlage von mindestens einem Element aus der Liste zu bestimmen: die mindestens eine Angabe, das für das zweite Bauteil bestimmte Bauteiltyp, die für das zweite Bauteil bestimmte Position relativ zum ersten Bauteil.
7. Gefäßanordnung nach einem der voranstehenden Absätze 1 bis 6, wobei das erste Bauteil ein Aufnahmegefäß aufweist oder an einem Aufnahmegefäß montiert ist, und / oder wobei das zweite Bauteil ein Abdeckungselement aufweist oder an einem Abdeckungselement montierbar ist.
8. Gefäßanordnung nach einem der voranstehenden Absätze 1 bis 7, wobei in einer Betriebsposition das mindestens eine magnetfeldbasierte Gegenelement des zweiten Bauteils und das mindestens eine magnetfeldbasierte Sensorelement des ersten Bauteils im Wesentlichen gegenübereinander angeordnet sind.
9. Gefäßanordnung nach einem der voranstehenden Absätze 1 bis 8, wobei das zweite Bauteil gegenüber dem ersten Bauteil um einen Drehpunkt von einer ersten Position in eine zweite Position schwenkbar ist, wobei in der ersten Position das mindestens eine magnetfeldbasierte Gegenelement des zweiten Bauteils und das mindestens eine magnetfeldbasierte Sensorelement des ersten Bauteils im Wesentlichen gegenübereinander angeordnet sind und einen Zwischenraum bilden, und wobei der Drehpunkt außerhalb des Zwischenraums angeordnet ist.
10. Gefäßanordnung nach einem der voranstehenden Absätze 1 bis 9, wobei das mindestens eine magnetfeldbasierte Sensorelement ein 3D-Magnetfeldsensor, insbesondere ein 3D-Hall-Sensor ist.
11. Gefäßanordnung für ein Küchengerät mit mindestens einem ein magnetfeldbasiertes Sensorelement aufweisenden ersten Bauteil, mit mindestens einem ein magnetfeldbasiertes Gegenelement mit einem Magnetfeld aufweisenden zweiten Bauteil, und mit einer Auswertungseinrichtung, wobei das mindestens eine magnetfeldbasierte Sensorelement dazu eingerichtet ist, das Magnetfeld des mindestens einen magnetfeldbasierten Gegenelements zu erfassen und mindestens eine Angabe für das erfasste Magnetfeld auszugeben, wobei die mindestens eine Angabe Koordinaten für mindestens zwei Dimensionen eines Koordinatensystems aufweist, und wobei die Auswertungseinrichtung dazu eingerichtet ist, auf der Grundlage der mindestens einen ausgegebenen Angabe eine Information über einen Bauteiltyp des zweiten Bauteils zu bestimmen.
12. Gefäßanordnung für ein Küchengerät mit mindestens einem ein magnetfeldbasiertes Sensorelement aufweisenden ersten Bauteil, mit mindestens einem ein magnetfeldbasiertes Gegenelement mit einem Magnetfeld aufweisenden zweiten Bauteil, und mit einer Auswertungseinrichtung, wobei das mindestens eine magnetfeldbasierte Sensorelement dazu eingerichtet ist, das Magnetfeld des mindestens einen magnetfeldbasierten Gegenelements zu erfassen und mindestens eine Angabe für das erfasste Magnetfeld auszugeben, wobei die mindestens eine Angabe Koordinaten für mindestens zwei Dimensionen eines Koordinatensystems aufweist, und wobei die Auswertungseinrichtung dazu eingerichtet ist, auf der Grundlage der mindestens einen ausgegebenen Angabe eine Information über eine Position des zweiten Bauteils zu bestimmen.
13. Verfahren zum Betreiben einer Gefäßanordnung für ein Küchengerät, insbesondere zum Betreiben einer Gefäßanordnung nach einem der voranstehenden Absätze 1 bis 12, bei dem ein Magnetfeld mindestens eines an einem zweiten Bauteil der Gefäßanordnung vorgesehenen magnetfeldbasierten Gegenelements durch mindestens ein an einem ersten Bauteil der Gefäßanordnung vorgesehenes magnetfeldbasiertes Sensorelement erfasst wird, bei dem für das erfasste Magnetfeld mindestens eine Angabe mit Koordinaten für mindestens zwei Dimensionen eines Koordinatensystems ausgegeben wird, und bei dem auf der Grundlage der mindestens einen ausgegebenen Angabe eine Information über einen Bauteiltyp des zweiten Bauteils und mindestens eine Information über eine Position des zweiten Bauteils bestimmt werden.
14. Verfahren nach Absatz 13, wobei auf der Grundlage eines für das zweite Bauteil bestimmten Bauteiltyps und / oder auf der Grundlage einer für das zweite Bauteil bestimmten Position relativ zum ersten Bauteil eine Zulässigkeitsangabe für das zweite Bauteil bestimmt wird.
15. Verfahren nach Absatz 13 oder 14, wobei für einen ersten Anordnungszustand des zweiten Bauteils gegenüber dem ersten Bauteil eine erste Angabe ausgegeben wird, für einen zweiten Anordnungszustand des zweiten Bauteils gegenüber dem ersten Bauteil eine zweite Angabe ausgegeben wird, wobei ein Unterschied zwischen der ersten Angabe und der zweiten Angabe bestimmt wird, und wobei auf der Grundlage des bestimmten Unterschieds eine Information über eine Bewegung des zweiten Bauteils bestimmt wird.
16. Verfahren nach einem der Absätze 13 bis 15, wobei kartesische Koordinaten der mindestens einen Angabe in sphärischen Koordinaten umgerechnet werden.
17. Maschinenlesbares Speichermedium mit Programmanweisungen, die, wenn sie durch einen Prozessor einer Gefäßanordnung für ein Küchengerät oder eines Küchengeräts, insbesondere einer Gefäßanordnung nach einem der Absätze 1 bis 12, ausgeführt werden, die Gefäßanordnung oder das Küchengerät dazu veranlassen, ein Verfahren nach einem der Absätze 13 bis 16 durchzuführen.

Weitere Merkmale und Vorteile der Gefäßanordnungen, der Verfahren und des maschinenlesbaren Speichermediums gemäß der ersten bis vierten Lehre ergeben sich aus der nachfolgenden Beschreibung von Ausführungsbeispielen, wobei auf die beigefügte Zeichnung Bezug genommen wird.

In der Zeichnung zeigen:
- Fig. 1: ein erstes Ausführungsbeispiel für eine Gefäßanordnung für ein Küchengerät;
- Fig. 2a: ein zweites Ausführungsbeispiel für eine Gefäßanordnung für ein Küchengerät in einer ersten Position in einer detaillierten Schnittdarstellung;

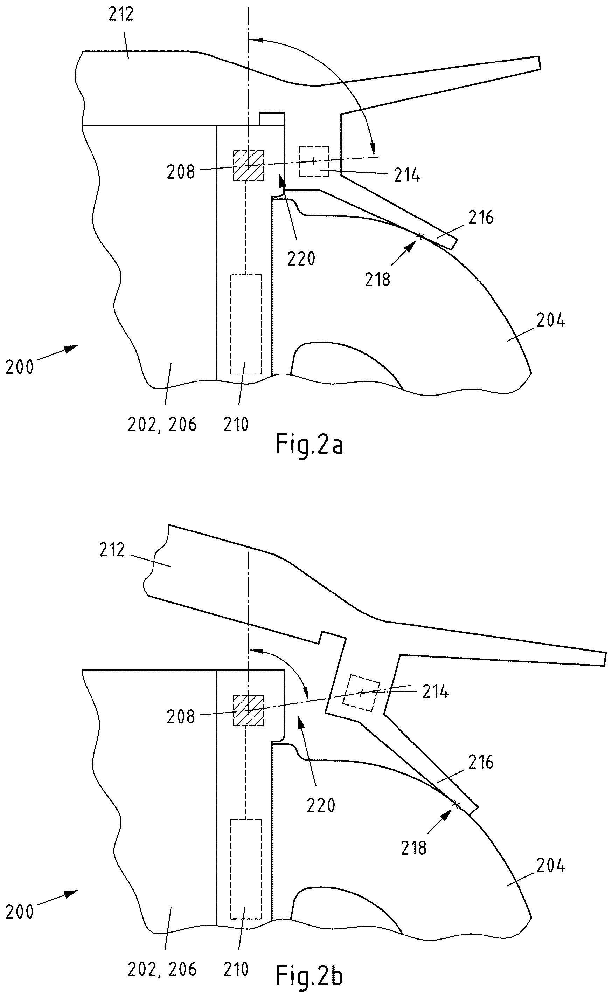

- Fig. 2a: ein zweites Ausführungsbeispiel für eine Gefäßanordnung für ein Küchengerät in einer zweiten Position in einer detaillierten Schnittdarstellung;

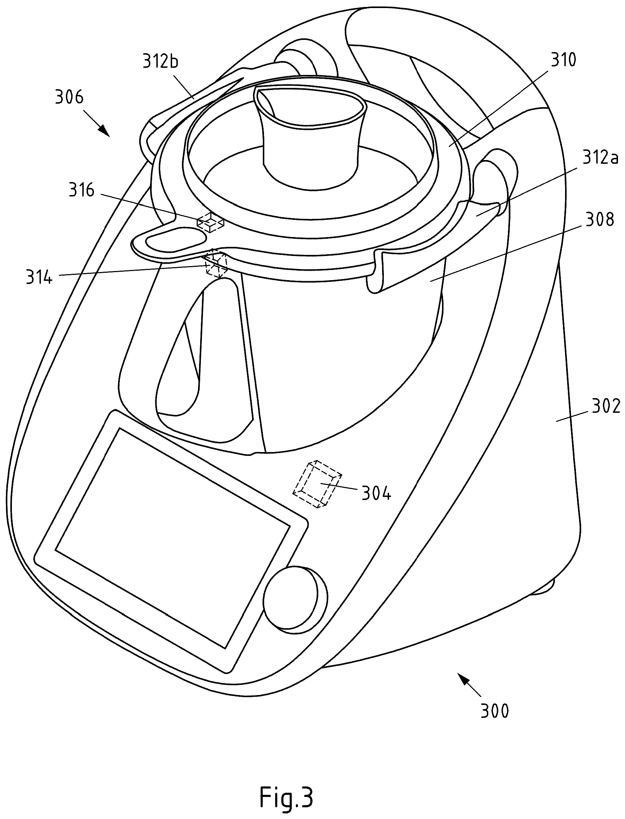

- Fig. 3: ein erstes Ausführungsbeispiel für ein Küchengerät;

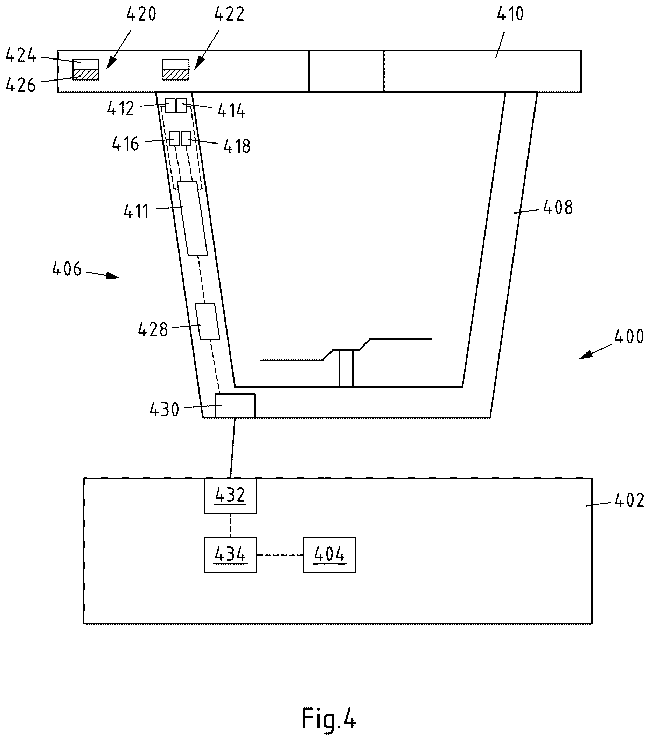

- Fig. 4: ein zweites Ausführungsbeispiel für ein Küchengerät;

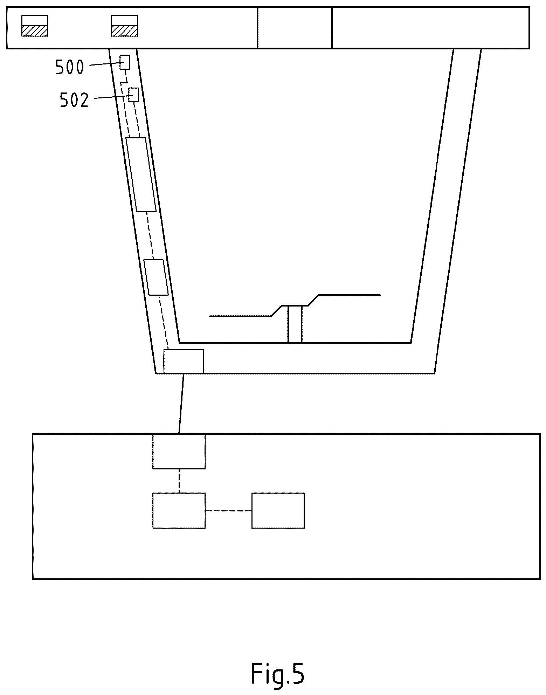

- Fig. 5: ein drittes Ausführungsbeispiel für ein Küchengerät;

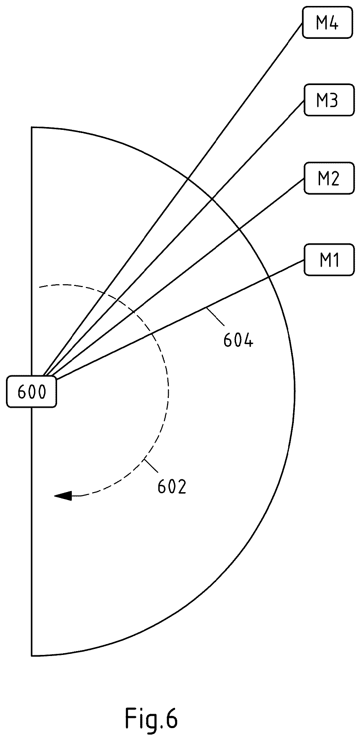

- Fig. 6: eine schematische Darstellung mehrerer Positionen eines magnetfeldbasierten Gegenelements relativ zu einem magnetfeldbasierten Sensorelement; und

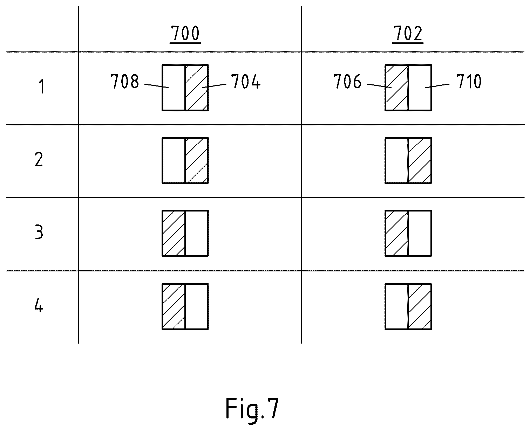

- Fig. 7: eine schematische Darstellung mehrerer Ausrichtungskombinationen für zwei magnetfeldbasierte Gegenelemente.

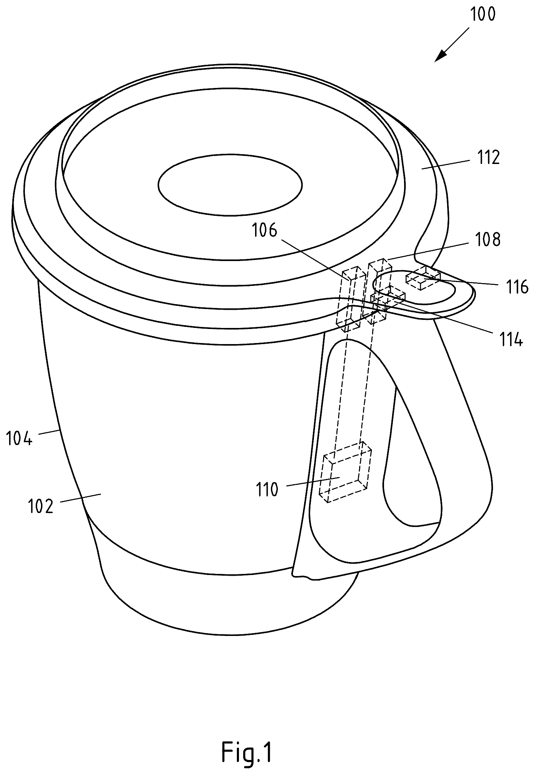

Fig. 1 zeigt ein erstes Ausführungsbeispiel für eine Gefäßanordnung 100 für ein Küchengerät. Die Gefäßanordnung 100 weist ein erstes Bauteil 102 in Form eines Speiseaufnahmeelements mit einem Grundkörper 104 auf. Am Grundkörper 104 des ersten Bauteils 102 sind ein erstes magnetfeldbasiertes Sensorelement 106, ein zweites magnetfeldbasiertes Sensorelement 108 und eine Auswertungseinrichtung 110 vorgesehen. Das erste magnetfeldbasierte Sensorelement 106 und das zweite magnetfeldbasierte Sensorelement 108 sind jeweils als 3D-Hall-Sensor ausgebildet.

Die Gefäßanordnung 100 weist ferner ein zweites Bauteil 112 in Form eines Abdeckungselements mit einem ersten magnetfeldbasierten Gegenelement 114 und mit einem zweiten magnetfeldbasierten Gegenelement 116 auf. Das erste magnetfeldbasierte Gegenelement 114 ist als Dauermagnet ausgebildet und erzeugt ein erstes Magnetfeld. Das zweite magnetfeldbasierte Gegenelement 116 ist ebenfalls als Dauermagnet ausgebildet und erzeugt ein zweites Magnetfeld.

Das erste magnetfeldbasierte Sensorelement 106 ist dazu eingerichtet, das erste Magnetfeld und das zweite Magnetfeld bzw. eine Überlappung des ersten Magnetfeldes mit dem zweiten Magnetfeld zu erfassen, und eine magnetische Flussdichte an die Auswertungseinrichtung 110 auszugeben. Das zweite magnetfeldbasierte Sensorelement 108 ist ebenfalls dazu eingerichtet, das erste Magnetfeld und das zweite Magnetfeld bzw. eine Überlappung des ersten Magnetfeldes mit dem zweiten Magnetfeld zu erfassen. Das erste magnetfeldbasierte Sensorelement 106 und das zweite magnetfeldbasierte Sensorelement 108 sind jeweils als 3D-Hall-Sensoren ausgebildet und dazu eingerichtet, für ein erfasstes Magnetfeld eine Angabe mit Komponenten in den Richtungen x, y und z auszugeben. Die Auswertungseinrichtung 110 ist dazu eingerichtet, auf der Grundlage einer solchen Angabe eine magnetische Flussdichte mit einem absoluten Betrag und mit einem positiven oder einem negativen Vorzeichen zu berechnen.

Weiter ist die dazu eingerichtet, auf der Grundlage des Vorzeichens der bestimmten Flussdichte eine Ausrichtung für das erste magnetfeldbasierte Gegenelement 114 und für das zweite magnetfeldbasierte Gegenelement 116 zu bestimmen. Ferner ist die Auswertungseinrichtung 110 dazu eingerichtet, die bestimmten Ausrichtungen mit vordefinierten Referenzwerten für Ausrichtungen zu vergleichen, beispielsweise mit den Referenzwerten aus der Fig. 7, und aus dem Vergleichsergebnis zu bestimmen, dass das zweite Bauteil 112 den Bauteiltyp "Abdeckungselement" aufweist.

Darüber hinaus ist die Auswertungseinrichtung 110 dazu eingerichtet, auf der Grundlage einer ersten, durch das erste magnetfeldbasierte Sensorelement 106 ausgegebenen Angabe bzw. auf der Grundlage einer hieraus berechneten ersten magnetischen Flussdichte einen ersten Wert für einen ersten Winkel Theta und einen ersten Wert für einen Radius zu berechnen, wobei der erste Winkel Theta und der erste Radius für eine Position des ersten magnetfeldbasierten Gegenelements 114 und / oder des zweiten magnetfeldbasierten Gegenelements 116 relativ zum ersten magnetfeldbasierten Sensorelement 106 indikativ sind. Daneben ist die Auswertungseinrichtung 110 dazu eingerichtet, auf der Grundlage einer zweiten, durch das zweite magnetfeldbasierte Sensorelement 108 ausgegebenen Angabe bzw. auf der Grundlage einer hieraus berechneten zweiten magnetischen Flussdichte einen zweiten Wert für einen zweiten Winkel Theta und einen zweiten Wert für einen Radius zu berechnen, wobei der zweite Winkel Theta und der zweite Radius für eine Position des ersten magnetfeldbasierten Gegenelements 114 und / oder des zweiten magnetfeldbasierten Gegenelements 116 relativ zum zweiten magnetfeldbasierten Sensorelement 108 indikativ sind.

Weiter ist die Auswertungseinrichtung 110 dazu eingerichtet, auf der Grundlage des ersten Werts für den ersten Winkel Theta, des ersten Werts für den ersten Radius und auf der Grundlage des zweiten Werts für den zweiten Winkel Theta und des zweiten Werts für den zweiten Radius eine Position des zweiten Bauteils 112 relativ zum ersten Bauteil 102 zu bestimmen.

Die Auswertungseinrichtung 110 ist ferner dazu eingerichtet, auf der Grundlage der durch das erste magnetfeldbasierte Sensorelement 106 ausgegebenen Angabe und auf der Grundlage der durch das zweite magnetfeldbasierte Sensorelement 108 ausgegebenen Angabe eine Überprüfung mittels eines Redundanz-Checks durchzuführen.

Fig. 2a und Fig. 2b zeigen ein zweites Ausführungsbeispiel für eine Gefäßanordnung 200 für ein Küchengerät in einer detaillierten Schnittdarstellung, wobei in der Fig. 2a die Gefäßanordnung 200 in einer ersten Position und in der Fig. 2b in einer zweiten Position gezeigt ist.

Die Gefäßanordnung 200 weist ein erstes Bauteil 202 in Form eines Speiseaufnahmeelements mit einem Griff 204 und mit einem Grundkörper 206 auf. Am Grundkörper 206 sind ein magnetfeldbasiertes Sensorelement 208 und eine Auswertungseinrichtung 210 angeordnet. Die Gefäßanordnung 200 weist ferner ein zweites Bauteil 212 in Form eines Abdeckungselements mit einem magnetfeldbasierten Gegenelement 214 und mit einem Schwenkelement 216 auf. Das zweite Bauteil 212 ist gegenüber dem ersten Bauteil 202 um einen Drehpunkt 218 von einer ersten Position in eine zweite Position schwenkbar. Der Drehpunkt 218 ist an einem Anliegepunkt des Schwenkelements 216 mit dem Griff 204 angeordnet.

In der durch die Fig. 2a gezeigten ersten Position sind das magnetfeldbasierte Gegenelement 214 des zweiten Bauteils 212 und das magnetfeldbasierte Sensorelement 208 des ersten Bauteils 202 im Wesentlichen gegenübereinander angeordnet und bilden einen Zwischenraum 220.

In der durch die Fig. 2b gezeigten zweiten Position ist das zweite Bauteil 212 gegenüber dem ersten Bauteil 202 um den Drehpunkt 218 geschwenkt und der Drehpunkt 218 ist außerhalb des Zwischenraums 220 angeordnet.

Die Anordnung des Drehpunkts 218 bewirkt eine erhöhte Bewegungsamplitude des magnetfeldbasierten Gegenelements 214 relativ zum magnetfeldbasierten Sensorelement 208 im Vergleich zu einer Konstellation, bei der der Drehpunkt 218 in dem Zwischenraum 220 liegen würde.

Fig. 3 zeigt ein erstes Ausführungsbeispiel für ein Küchengerät 300. Das Küchengerät 300 weist ein Grundgerät 302 mit einer Auswertungseinrichtung 304 und eine Gefäßanordnung 306 mit einem ersten Bauteil 308, mit einem zweiten Bauteil 310 und mit einem Verriegelungselement 312a, 312b auf. Am ersten Bauteil 308 sind ein magnetfeldbasiertes Sensorelement 314 und am zweiten Bauteil 310 ist ein magnetfeldbasiertes Gegenelement 316 vorgesehen. Das magnetfeldbasierte Gegenelement 316 ist dazu ausgebildet, ein Magnetfeld zu erzeugen. Das magnetfeldbasierte Sensorelement 314 ist dazu ausgebildet, das Magnetfeld zu erfassen und mindestens eine Angabe für das erfasste Magnetfeld auszugeben, wobei die mindestens eine Angabe Koordinaten für mindestens zwei Dimensionen eines Koordinatensystems aufweist. Die Auswertungseinrichtung 304 ist dazu eingerichtet, auf der Grundlage der ausgegebenen Angabe eine Information über einen Bauteiltyp des zweiten Bauteils 310 und eine Information über eine Position des zweiten Bauteils 310 zu bestimmen.

Fig. 4 zeigt ein zweites Ausführungsbeispiel für ein Küchengerät 400. Das Küchengerät 400 weist ein Grundgerät 402 mit einer Steuerungseinrichtung 404 und eine Gefäßanordnung 406 mit einem ersten Bauteil 408, mit einem zweiten Bauteil 410 und mit einer Auswertungseinrichtung 411 auf. Am ersten Bauteil 408 sind vier magnetfeldbasierte Sensorelemente 412, 414, 416, 418 und am zweiten Bauteil 410 sind zwei magnetfeldbasierte Gegenelemente 420, 422 vorgesehen. Die zwei magnetfeldbasierten Gegenelemente 420, 422 weisen jeweils einen magnetischen Nordpol 424 und einen magnetischen Südpol 426 auf und sind gemäß einer vordefinierten Ausrichtung gegenübereinander angeordnet, so dass die Ausrichtung eine magnetische Kodierung für den Bauteiltyp des zweiten Bauteils 410 bildet.

Ferner sind die zwei magnetfeldbasierten Gegenelemente 420, 422 jeweils dazu ausgebildet, ein Magnetfeld zu erzeugen.

Die vier magnetfeldbasierten Sensorelemente 412, 414, 416, 418 sind jeweils dazu ausgebildet, die durch die zwei magnetfeldbasierten Gegenelemente 420, 422 erzeugten Magnetfelder zu erfassen und eine entsprechende Angabe an die Auswertungseinrichtung 411 auszugeben.

Die vier magnetfeldbasierten Sensorelemente 412, 414, 416, 418 sind im oberen Bereich des ersten Bauteils 408 angeordnet und die zwei magnetfeldbasierten Gegenelemente 420, 422 sind derart am zweiten Bauteil 410 angeordnet, dass in der dargestellten geschlossenen Position der Gefäßanordnung 406 die zwei magnetfeldbasierten Gegenelemente 420, 422 nah an den vier magnetfeldbasierten Sensorelementen 412, 414, 416, 418 im zweiten Bauteil 410 liegen.

Die Auswertungseinrichtung 411 ist dazu eingerichtet, auf der Grundlage der ausgegebenen Angaben eine Überprüfung im Rahmen eines Redundanzprüfungsvorgangs durchzuführen, um gegebenenfalls Erfassungsfehler der magnetfeldbasierten Sensorelemente 412, 414, 416, 418 zu erkennen und gegebenenfalls auszugleichen.

Weiter ist die Auswertungseinrichtung 411 dazu eingerichtet, auf der Grundlage der ausgegebenen Angaben eine Information über einen Bauteiltyp des zweiten Bauteils 410 und eine Information über eine Position des zweiten Bauteils 410 zu bestimmen, und diese Informationen über ein Schnittstellenmodul 428 und ein Kontaktmodul 430 seitens des ersten Bauteils 408 dann über ein Kontaktmodul 432 und ein Schnittstellenmodul 434 seitens des Grundgeräts 402 an die Steuerungseinrichtung 404 des Grundgeräts 402 weiterzuleiten. Die Steuerungseinrichtung 404 ist wiederum dazu eingerichtet, die durch die Auswertungseinrichtung 411 ausgegebenen Informationen für eine Anpassung der Steuerung des Küchengeräts 400 zu berücksichtigen.

Fig. 5 zeigt ein drittes Ausführungsbeispiel für ein Küchengerät, das ähnlich wie das Küchengerät aus der Fig. 4 ausgebildet ist mit dem Unterschied, dass anstatt vier magnetfeldbasierten Sensorelementen zwei magnetfeldbasierte Sensorelemente 500, 502 vorgesehen sind. In der Fig. 5 wurden somit die Komponente des Küchengeräts übernommen, die den Komponenten des Küchengeräts aus der Fig. 4 entsprechen, und neue Bezugszeichen lediglich für die Komponente vermerkt, die sich von deren des Küchengeräts aus der Fig. 4 unterscheiden.

Die zwei magnetfeldbasierte Sensorelemente 500, 502 verfügen über eine eigene Testfunktionalität zur Überprüfung der Erfassungsergebnisse. Die Testfunktionalität ermöglich auch die Sensorelemente 500, 502 über eine Messkette zu prüfen, so dass die funktionale Sicherheit gewährleistet werden kann.

Fig. 6 zeigt eine schematische Darstellung mehrerer Positionen eines magnetfeldbasierten Gegenelements relativ zu einem magnetfeldbasierten Sensorelement 600.

Mehrere Winkelpositionen M1, M2, M3 M4 des magnetfeldbasierten Gegenelements sind dargestellt, wobei die Winkelpositionen M1, M2, M3 M4 unterschiedlichen Werten für einen Theta Winkel 602 und unterschiedlichen Werten für einen Radius 604 entsprechen. Der Radius 604 entspricht dem Abstand zwischen dem magnetfeldbasierten Sensorelement 600 und dem magnetfeldbasierten Gegenelement. Der Theta Winkel 602 ist der Winkel zwischen einer fiktiven Gerade, die sich durch das magnetfeldbasierte Sensorelement 600 erstreckt, und der Position des magnetfeldbasierten Gegenelements, wobei die Position des magnetfeldbasierten Sensorelements 600 als Koordinatenursprung dient. Dabei entsprechen beispielsweise 0 Grad einer vertikalen Anordnung mit dem magnetfeldbasierten Gegenelement oberhalb vom magnetfeldbasierten Sensorelement 600 und 180 Grad einer vertikalen Anordnung mit dem magnetfeldbasierten Gegenelement unterhalb vom magnetfeldbasierten Sensorelement 600. Bei einem Thetawinkel von etwa 90 Grad liegen das magnetfeldbasierte Gegenelement und das magnetfeldbasierte Sensorelement 600 gegenübereinander in einer horizontalen Anordnung.

Im Folgenden werden exemplarische Situationen beschrieben, die beim Einsatz einer Gefäßanordnung, die das magnetfeldbasierte Sensorelement 600 und das magnetfeldbasierte Gegenelement aufweist, jeder der vier dargestellten Positionen M1, M2, M3 M4 des magnetfeldbasierten Gegenelements relativ zum magnetfeldbasierten Sensorelement 600 entsprechen können. Dabei weist die Gefäßanordnung eine Auswertungseinrichtung, ein erstes Bauteil in Form eines Topfes und ein zweites Bauteil in Form eines Deckels auf, wobei das magnetfeldbasierte Sensorelement 600 am ersten Bauteil angeordnet ist und wobei das magnetfeldbasierte Gegenelement am zweiten Bauteil angeordnet ist.

Die Position M1 entspricht einer tiefen Position, bei der beispielsweise der Deckel auf dem Topf heruntergedrückt ist und ggf. verriegelt ist.

Die Positionen M2 und M3 entsprechen Zwischenpositionen, die während der Benutzung eingenommen werden könnten.

Die Position M4 repräsentiert den Fall, in dem der Deckel nur auf dem Topf aufgelegt ist.

Fig. 7 zeigt eine schematische Darstellung mehrerer Ausrichtungskombinationen für zwei magnetfeldbasierte Gegenelemente 700, 702. Jeder der zwei magnetfeldbasierten Gegenelemente 700, 702 weist einen magnetischen Südpol 704, 706 und einen magnetischen Nordpol 708, 710 auf. In einer ersten Ausrichtungskombination sind die zwei magnetfeldbasierten Gegenelemente 700, 702 derart ausgerichtet, dass sich die Südpole 704, 706 gegenüberliegen. Bei einer zweiten Ausrichtungskombination liegen sich ein Südpol 704, 706 und ein Nordpol 708, 710 gegenüber. Bei einer dritten Ausrichtungskombination liegen sich ebenfalls ein Südpol 704, 706 und ein Nordpol 708, 710 gegenüber. Bei einer vierten Ausrichtungskombination sind die zwei magnetfeldbasierten Gegenelemente 700, 702 derart ausgerichtet, dass sich die Südpole 704, 706 entgegenliegen.

Jeder Ausrichtungskombination kann einem vorbestimmten Bauteiltyp zugordnet sein, beispielsweise "Abdeckungselement", "Rührelement", "Garelement", "Dampfelement". Mit der Zuordnung der jeweiligen Ausrichtungen mit den Bauteiltypen kann bei Erfassung einer der Ausrichtungen einen Bauteiltyp bestimmt werden, und der Bauteiltyp dann für eine Steuerung der Gefäßanordnung oder des Küchengeräts, für die bzw. für das das Bauteiltyp bestimmt wurde, berücksichtigt werden.

## Patentansprüche

1. Gefäßanordnung (100, 200, 306, 406) für ein Küchengerät (300, 400)
- mit mindestens einem ein magnetfeldbasiertes Sensorelement (106, 108, 208, 314, 412, 414, 416, 418, 500, 502, 600) aufweisenden ersten Bauteil (102, 202, 308, 408),
- mit mindestens einem ein magnetfeldbasiertes Gegenelement (114, 116, 214, 316, 420, 422, 700, 702) mit einem Magnetfeld aufweisenden zweiten Bauteil (112, 212, 310, 410), und
- mit einer Auswertungseinrichtung (110, 210, 304, 411),
**dadurch gekennzeichnet,**
- **dass** das mindestens eine magnetfeldbasierte Sensorelement (106, 108, 208, 314, 412, 414, 416, 418, 500, 502, 600) dazu eingerichtet ist, das Magnetfeld des mindestens einen magnetfeldbasierten Gegenelements (114, 116, 214, 316, 420, 422, 700, 702) zu erfassen und mindestens eine Angabe für das erfasste Magnetfeld auszugeben,
- wobei die mindestens eine Angabe Koordinaten für mindestens zwei Dimensionen eines Koordinatensystems aufweist, und
- **dass** die Auswertungseinrichtung (110, 210, 304, 411) dazu eingerichtet ist, auf der Grundlage der mindestens einen ausgegebenen Angabe eine Information über einen Bauteiltyp des zweiten Bauteils (112, 212, 310, 410) und eine Information über eine Position des zweiten Bauteils (112, 212, 310, 410) zu bestimmen.

2. Gefäßanordnung (100, 200, 306, 406) nach Anspruch 1,
**dadurch gekennzeichnet,**
- **dass** die Auswertungseinrichtung (110, 210, 304, 411) dazu eingerichtet ist, eine Ausrichtung des mindestens einen magnetfeldbasierten Gegenelements (114, 116, 214, 316, 420, 422, 700, 702) in Abhängigkeit von der mindestens einen Angabe zu bestimmen,
- **dass** die Auswertungseinrichtung (110, 210, 304, 411) dazu eingerichtet ist, die bestimmte Ausrichtung des mindestens einen magnetfeldbasierten Gegenelements (114, 116, 214, 316, 420, 422, 700, 702) mit mindestens einem Referenzwert für eine Ausrichtung zu vergleichen, wobei der mindestens eine Referenzwert für eine Ausrichtung mindestens einem Bauteiltyp zugeordnet ist, und
- **dass** die Auswertungseinrichtung (110, 210, 304, 411) dazu eingerichtet ist, einen Bauteiltyp für das das mindestens eine magnetfeldbasierte Gegenelement (114, 116, 214, 316, 420, 422, 700, 702) aufweisende zweite Bauteil (112, 212, 310, 410) in Abhängigkeit von dem Vergleichsergebnis zu bestimmen.

3. Gefäßanordnung (100, 200, 306, 406) nach Anspruch 1 oder 2,
**dadurch gekennzeichnet,**
- **dass** die Auswertungseinrichtung (110, 210, 304, 411) dazu eingerichtet ist, eine Position des mindestens einen magnetfeldbasierten Gegenelements (114, 116, 214, 316, 420, 422, 700, 702) relativ zum mindestens einen magnetfeldbasierten Sensorelement (106, 108, 208, 314, 412, 414, 416, 418, 500, 502, 600) in Abhängigkeit von der mindestens einen Angabe zu bestimmen,
- **dass** die Auswertungseinrichtung (110, 210, 304, 411) dazu eingerichtet ist, die bestimmte Position mit mindestens einer Referenzangabe für eine Position zu vergleichen, und
- **dass** die Auswertungseinrichtung (110, 210, 304, 411) dazu eingerichtet ist, eine Positionsänderung des zweiten Bauteils (112, 212, 310, 410) relativ zum ersten Bauteil (102, 202, 308, 408) in Abhängigkeit von dem Vergleichsergebnis zu bestimmen.

4. Gefäßanordnung (100, 200, 306, 406) nach einem der voranstehenden Ansprüche,
**dadurch gekennzeichnet,**
- **dass** das zweite Bauteil (112, 212, 310, 410) ein erstes magnetfeldbasiertes Gegenelement (114, 116, 214, 316, 420, 422, 700, 702) mit einem ersten Magnetfeld und ein zweites magnetfeldbasiertes Gegenelement (114, 116, 214, 316, 420, 422, 700, 702) mit einem zweiten Magnetfeld aufweist,
- **dass** das mindestens eine magnetfeldbasierte Sensorelement (106, 108, 208, 314, 412, 414, 416, 418, 500, 502, 600) dazu eingerichtet ist, das erste Magnetfeld und das zweite Magnetfeld und / oder eine Überlappung des ersten Magnetfeldes mit dem zweiten Magnetfeld zu erfassen, und
- **dass** die mindestens eine durch das mindestens eine magnetfeldbasierte Sensorelement (106, 108, 208, 314, 412, 414, 416, 418, 500, 502, 600) ausgegebene Angabe der Erfassung des ersten Magnetfeldes und des zweiten Magnetfeldes und / oder einer Überlappung des ersten Magnetfeldes mit dem zweiten Magnetfeld entspricht.

5. Gefäßanordnung (100, 200, 306, 406) nach einem der voranstehenden Ansprüche,
**dadurch gekennzeichnet,**
**dass** das erste Bauteil (102, 202, 308, 408) mindestens zwei magnetfeldbasierte Sensorelemente (106, 108, 208, 314, 412, 414, 416, 418, 500, 502, 600) aufweist.

6. Gefäßanordnung (100, 200, 306, 406) nach einem der voranstehenden Ansprüche,
**dadurch gekennzeichnet,**
**dass** die Auswertungseinrichtung (110, 210, 304, 411) dazu eingerichtet ist, eine Zulässigkeitsangabe für das zweite Bauteil (112, 212, 310, 410) auf der Grundlage von mindestens einem Element aus der Liste zu bestimmen: die mindestens eine Angabe, das für das zweite Bauteil (112, 212, 310, 410) bestimmte Bauteiltyp, die für das zweite Bauteil (112, 212, 310, 410) bestimmte Position relativ zum ersten Bauteil (102, 202, 308, 408).

7. Gefäßanordnung (100, 200, 306, 406) nach einem der voranstehenden Ansprüche,
**dadurch gekennzeichnet,**
- **dass** das erste Bauteil (102, 202, 308, 408) ein Aufnahmegefäß aufweist oder an einem Aufnahmegefäß montiert ist, und / oder
- **dass** das zweite Bauteil (112, 212, 310, 410) ein Abdeckungselement aufweist oder an einem Abdeckungselement montierbar ist.

8. Gefäßanordnung (100, 200, 306, 406) nach einem der voranstehenden Ansprüche,
**dadurch gekennzeichnet,**
**dass** in einer Betriebsposition das mindestens eine magnetfeldbasierte Gegenelement (114, 116, 214, 316, 420, 422, 700, 702) des zweiten Bauteils (112, 212, 310, 410) und das mindestens eine magnetfeldbasierte Sensorelement (106, 108, 208, 314, 412, 414, 416, 418, 500, 502, 600) des ersten Bauteils (102, 202, 308, 408) im Wesentlichen gegenübereinander angeordnet sind.

9. Gefäßanordnung (100, 200, 306, 406) nach einem der voranstehenden Ansprüche,
**dadurch gekennzeichnet,**
- **dass** das zweite Bauteil (112, 212, 310, 410) gegenüber dem ersten Bauteil (102, 202, 308, 408) um einen Drehpunkt (218) von einer ersten Position in eine zweite Position schwenkbar ist,
- **dass** in der ersten Position das mindestens eine magnetfeldbasierte Gegenelement (114, 116, 214, 316, 420, 422, 700, 702) des zweiten Bauteils (112, 212, 310, 410) und das mindestens eine magnetfeldbasierte Sensorelement (106, 108, 208, 314, 412, 414, 416, 418, 500, 502, 600) des ersten Bauteils (102, 202, 308, 408) im Wesentlichen gegenübereinander angeordnet sind und einen Zwischenraum (220) bilden, und
- **dass** der Drehpunkt (218) außerhalb des Zwischenraums (220) angeordnet ist.

10. Gefäßanordnung (100, 200, 306, 406) nach einem der voranstehenden Ansprüche,
**dadurch gekennzeichnet,**
**dass** das mindestens eine magnetfeldbasierte Sensorelement (106, 108, 208, 314, 412, 414, 416, 418, 500, 502, 600) ein 3D-Magnetfeldsensor, insbesondere ein 3D-Hall-Sensor ist.

11. Gefäßanordnung (100, 200, 306, 406) für ein Küchengerät (300, 400)
- mit mindestens einem ein magnetfeldbasiertes Sensorelement (106, 108, 208, 314, 412, 414, 416, 418, 500, 502, 600) aufweisenden ersten Bauteil (102, 202, 308, 408),
- mit mindestens einem ein magnetfeldbasiertes Gegenelement (114, 116, 214, 316, 420, 422, 700, 702) mit einem Magnetfeld aufweisenden zweiten Bauteil (112, 212, 310, 410), und
- mit einer Auswertungseinrichtung (110, 210, 304, 411),
**dadurch gekennzeichnet,**
- **dass** das mindestens eine magnetfeldbasierte Sensorelement (106, 108, 208, 314, 412, 414, 416, 418, 500, 502, 600) dazu eingerichtet ist, das Magnetfeld des mindestens einen magnetfeldbasierten Gegenelements (114, 116, 214, 316, 420, 422, 700, 702) zu erfassen und mindestens eine Angabe für das erfasste Magnetfeld auszugeben,
- wobei die mindestens eine Angabe Koordinaten für mindestens zwei Dimensionen eines Koordinatensystems aufweist, und
- **dass** die Auswertungseinrichtung (110, 210, 304, 411) dazu eingerichtet ist, auf der Grundlage der mindestens einen ausgegebenen Angabe eine Information über einen Bauteiltyp des zweiten Bauteils (112, 212, 310, 410) zu bestimmen.

12. Gefäßanordnung (100, 200, 306, 406) für ein Küchengerät (300, 400)
- mit mindestens einem ein magnetfeldbasiertes Sensorelement (106, 108, 208, 314, 412, 414, 416, 418, 500, 502, 600) aufweisenden ersten Bauteil (102, 202, 308, 408),
- mit mindestens einem ein magnetfeldbasiertes Gegenelement (114, 116, 214, 316, 420, 422, 700, 702) mit einem Magnetfeld aufweisenden zweiten Bauteil (112, 212, 310, 410), und
- mit einer Auswertungseinrichtung (110, 210, 304, 411),
**dadurch gekennzeichnet,**
- **dass** das mindestens eine magnetfeldbasierte Sensorelement (106, 108, 208, 314, 412, 414, 416, 418, 500, 502, 600) dazu eingerichtet ist, das Magnetfeld des mindestens einen magnetfeldbasierten Gegenelements (114, 116, 214, 316, 420, 422, 700, 702) zu erfassen und mindestens eine Angabe für das erfasste Magnetfeld auszugeben,
- wobei die mindestens eine Angabe Koordinaten für mindestens zwei Dimensionen eines Koordinatensystems aufweist, und
- **dass** die Auswertungseinrichtung (110, 210, 304, 411) dazu eingerichtet ist, auf der Grundlage der mindestens einen ausgegebenen Angabe eine Information über eine Position des zweiten Bauteils (112, 212, 310, 410) zu bestimmen.

13. Verfahren zum Betreiben einer Gefäßanordnung (100, 200, 306, 406) für ein Küchengerät (300, 400), insbesondere zum Betreiben einer Gefäßanordnung (100, 200, 306, 406) nach einem der voranstehenden Ansprüche,
- bei dem ein Magnetfeld mindestens eines an einem zweiten Bauteil (112, 212, 310, 410) der Gefäßanordnung (100, 200, 306, 406) vorgesehenen magnetfeldbasierten Gegenelements (114, 116, 214, 316, 420, 422, 700, 702) durch mindestens ein an einem ersten Bauteil (102, 202, 308, 408) der Gefäßanordnung (100, 200, 306, 406) vorgesehenes magnetfeldbasiertes Sensorelement (106, 108, 208, 314, 412, 414, 416, 418, 500, 502, 600) erfasst wird,
- bei dem für das erfasste Magnetfeld mindestens eine Angabe mit Koordinaten für mindestens zwei Dimensionen eines Koordinatensystems ausgegeben wird, und
- bei dem auf der Grundlage der mindestens einen ausgegebenen Angabe eine Information über einen Bauteiltyp des zweiten Bauteils (112, 212, 310, 410) und mindestens eine Information über eine Position des zweiten Bauteils (112, 212, 310, 410) bestimmt werden.

14. Verfahren nach Anspruch 13,
**dadurch gekennzeichnet,**
**dass** auf der Grundlage eines für das zweite Bauteil (112, 212, 310, 410) bestimmten Bauteiltyps und / oder auf der Grundlage einer für das zweite Bauteil (112, 212, 310, 410) bestimmten Position relativ zum ersten Bauteil (102, 202, 308, 408) eine Zulässigkeitsangabe für das zweite Bauteil (112, 212, 310, 410) bestimmt wird, und
**dass** insbesondere kartesische Koordinaten der mindestens einen Angabe in sphärischen Koordinaten umgerechnet werden.

15. Verfahren nach Anspruch 13 oder 14,
**dadurch gekennzeichnet,**
- **dass** für einen ersten Anordnungszustand des zweiten Bauteils (112, 212, 310, 410) gegenüber dem ersten Bauteil (102, 202, 308, 408) eine erste Angabe ausgegeben wird,
- **dass** für einen zweiten Anordnungszustand des zweiten Bauteils (112, 212, 310, 410) gegenüber dem ersten Bauteil (102, 202, 308, 408) eine zweite Angabe ausgegeben wird,
- **dass** ein Unterschied zwischen der ersten Angabe und der zweiten Angabe bestimmt wird,
- **dass** auf der Grundlage des bestimmten Unterschieds eine Information über eine Bewegung des zweiten Bauteils (112, 212, 310, 410) bestimmt wird, und
- **dass** insbesondere kartesische Koordinaten der mindestens einen Angabe in sphärischen Koordinaten umgerechnet werden.

16. Maschinenlesbares Speichermedium mit Programmanweisungen, die, wenn sie durch einen Prozessor einer Gefäßanordnung (100, 200, 306, 406) für ein Küchengerät (300, 400) oder eines Küchengeräts (300, 400), insbesondere einer Gefäßanordnung (100, 200, 306, 406) nach einem der Ansprüche 1 bis 12, ausgeführt werden, die Gefäßanordnung (100, 200, 306, 406) oder das Küchengerät (300, 400) dazu veranlassen, ein Verfahren nach einem der Ansprüche 13 bis 15 durchzuführen.
